# EUROPÄISCHE PATENTSCHRIFT

(11) **EP 3 383 692 B1**
(45) Veröffentlichungstag und Bekanntmachung des Hinweises auf die Patenterteilung: **01.06.2022**
(21) Anmeldenummer: 16802085.7
(22) Anmeldetag: 30.11.2016
(51) Int. Cl.: B60L 9/28, B60L 9/24, H02M 1/10, H02M 7/493

(54) **STROMRICHTER**
POWER CONVERTER
CONVERTISSEUR DE COURANT

(30) Priorität: 30.11.2015 EP 15197041
(43) Veröffentlichungstag der Anmeldung: 10.10.2018
(73) Patentinhaber: ABB Schweiz AG, 5400 Baden (CH)
(72) Erfinder: HUGGENBERGER, Thomas, 5417 Untersiggenthal (CH)
(74) Vertreter: Qip Patentanwälte Dr. Kuehn & Partner mbB
(86) Internationale Anmeldenummer: PCT/EP2016/079175
(87) Internationale Veröffentlichungsnummer: WO 2017/093273

(56) Entgegenhaltungen:
- EP-A1- 2 689 983
- DE-A1- 19 630 284
- DE-A1-102009 008 549
- DE-A1-102010 039 699
- ABB: "Product data sheet - BORDLINE CC1500 DE Propulsion and auxiliary converter for diesel-electric power cars for intercity trains", , 31. Dezember 2012 (2012-12-31), XP055272145, Gefunden im Internet: URL:https://library.e.abb.com/public/63bbb 409644007cac1257ca700339ff4/PDS BORDLINE CC1500 DE_M_1400_3BHS340077 ZAB E08 Rev B_lowres.pdf [gefunden am 2016-05-12]
- "Railvolution", , 31. Januar 2013 (2013-01-31), XP055271867, Gefunden im Internet: URL:https://library.e.abb.com/public/026b0 956eeae6b28c1257bb2002ab465/Railvolution01 -13-ABB-Traction-converters-Russia.pdf [gefunden am 2016-05-11]

## Beschreibung

### Technisches Gebiet

Die vorliegende Erfindung bezieht sich auf das Gebiet der Stromrichter, insbesondere der Stromrichter zum Betreiben von elektrischen Maschinen. Weiter bezieht sich die vorliegende Erfindung auf eine Antriebseinheit.

### Stand der Technik

Stromrichter sind dem Fachmann bestens bekannt. Stromrichter zum Betreiben von elektrischen Maschinen umfassen typischerweise einen Umrichter, also eine Kettenschaltung eines Gleichrichters, eines Gleichspannungszwischenkreis und eines Wechselrichters. Betreibt ein Stromrichter eine Vielzahl von elektrische Maschinen besteht er typischerweise aus mehreren Umrichtern, wobei die Umrichter wechselrichterseitig je auf eine oder mehrere Maschinen verbindbar sind.

Beispielsweise besteht der Stromrichter Bordline CC1500 DE von ABB aus zwei solchen Umrichtern, wobei diese Umrichter generatorseitig, also gleichrichterseitig parallel geschaltet sind und maschinenseitig, das heisst lastseitig je auf separate elektrische Maschinen verbunden sind. Eine solche Lösung setzt voraus, dass die Umrichtertopologie, insbesondere Gleichrichtertopologien, das heisst die Gleichrichterschaltungen, insofern aufeinander abgestimmt sind, dass keine Ausgleichströme, das heisst Kurzschlussströme, zwischen den Umrichtern entstehen.

Die Stromrichtertopologie des Bordline CC1500 DE betreffend, führt eine gemeinsame Energieversorgung dazu, dass die parallel geschalteten Gleichrichterschaltungen der Umrichter als passive Gleichrichterschaltungen ausgebildet werden müssen. Vierquadrantensteller, das heisst aktive Gleichrichterschaltungen, können nicht verwendet werden, da die Schaltvorgänge dieser Vierquadrantensteller zu unerwünschten Ausgleichströmen zwischen den beiden Vierquadrantenstellern führen würden.

Die Energieversorgung des Bordline CC1500 DE betreffend, hat die Verwendung von passiven Gleichrichterschaltungen, insbesondere der daraus resultierende unidirektionale Energiefluss von der Energieversorgung zum Umrichter, zur Folge, dass nur bestimmte Energieversorgungen verwendet werden können. Einige Ausführungsformen der Energieversorgung, beispielsweise die Verwendung einer Asynchronmaschine, setzen einen bidirektionalen Energiefluss, beispielsweise zur Magnetisierung der Asynchronmaschine, voraus. Die Stromrichtertopologie des Bordline CC1500 DE und ähnliche Topologien verunmöglicht also die Verwendung derartiger Energieversorgungen.

Es ist Aufgabe der Erfindung einen Stromrichter anzugeben, welcher gleichrichterseitig parallel geschaltete Umrichter aus einer Energieversorgung versorgen kann, ohne die Art der verwendeten Energieversorgung und/oder der Gleichrichterschaltungstopologie einzuschränken.

Die DE 10 2009 008 549 A1 offenbart eine Anordnung zum Betreiben von Verbrauchern in einem Schienenfahrzeug mit elektrischer Energie, wobei die Anordnung wahlweise von einem Energieversorgungsnetz oder von einer netzunabhängigen elektrischen Energieversorgungseinheit mit elektrischer Energie versorgbar ist.

Die DE 196 30 284 A1 offenbart ein Antriebssystem für Schienenfahrzeuge, das aus mindestens zwei über mindestens einen Transformator gekoppelten Teilsystemen besteht.

### Offenbarung der Erfindung

Diese Aufgabe wird durch den Stromrichter gemäss Anspruch 1 sowie durch das Antriebsystem gemäss dem nebengeordneten Anspruch gelöst.

Weitere vorteilhafte Ausführungsformen der vorliegenden Erfindung sind in den abhängigen Ansprüchen angegeben.

Erfindungsgemäss ist ein Stromrichter zum Betreiben einer ersten elektrischen Maschine und einer zweiten elektrischen Maschine vorgesehen, wobei der Stromrichter einen ersten

Umrichter, einen zweiten Umrichter, sowie einen ersten Anschluss, einen zweiten Anschluss und einen dritten Anschluss für die Verbindung des Stromrichters mit einer dreiphasigen Energieversorgung umfasst, wobei der erste Umrichter eine erste Gleichrichterschaltung und eine zweite Gleichrichterschaltung, der zweite Umrichter eine dritte Gleichrichterschaltung umfassen, wobei die erste Gleichrichterschaltung einen ersten wechselstromseitigen Pol und einen zweiten wechselstromseitigen Pol aufweist, die zweite Gleichrichterschaltung einen dritten wechselstromseitigen Pol und einen vierten wechselstromseitigen Pol aufweist und die dritte Gleichrichterschaltung einen fünften wechselstromseitigen Pol und einen sechsten wechselstromseitigen Pol aufweist, die erste Gleichrichterschaltung und die zweite Gleichrichterschaltung gleichspannungsseitig parallel geschaltet und mit einem gemeinsamen ersten gleichspannungsseitigen Pol und einem gemeinsamen zweiten gleichspannungsseitigen Pol verbunden sind, wobei die dritte Gleichrichterschaltung gleichspannungsseitig auf einen dritten gleichspannungsseitigen Pol und einen vierten gleichspannungsseitigen Pol verbunden ist, wobei der erste gleichspannungsseitige Pol mit dem dritten gleichspannungsseitigen Pol über eine ersten Strompfad zumindest verbindbar ist und der zweite gleichspannungsseitige Pol mit dem vierten gleichspannungsseitigen Pol über einen zweiten Strompfad zumindest verbindbar ist, wobei der erste Strompfad und der zweite Strompfad einen Halbleiterschalter umfasst.

Vorteilhaft erweist es sich den ersten Umrichter, insbesondere den ersten Gleichspannungszwischenkreis über die erste Gleichrichterschaltung und die zweite Gleichrichterschaltung mit Energie aus der Energieversorgung versorgen zu können. Erfindungsgemäß wird der zweite Umrichter, insbesondere der zweite Gleichspannungszwischenkreis, durch das Schliessen des ersten Strompfades und des zweiten Strompfades mit Energie aus dem ersten Gleichspannungszwischenkreis versorgt. Von der Energieversorgung aus gesehen, findet die Ladung des zweiten Gleichspannungszwischenkreises indirekt, das heisst über den ersten Gleichspannungszwischenkreis statt. Diese indirekte Energieversorgung des zweiten Umrichters ermöglicht es, beide Umrichter aus einer

Energieversorgung zu versorgen, ohne dabei die beiden Umrichter auf dieselbe Energieversorgung verbinden zu müssen. Wechselstromseitige Ausgleichströme zwischen den Gleichrichterschaltungen entfallen. Ein solcher Stromrichter ermöglicht die Versorgung beider Umrichter aus einer Energieversorgung ohne Einschränkungen bezüglich der Umrichtertopologie und/oder Energieversorgungsart.

Gemäss einer bevorzugten Ausführungsform des Stromrichters ist der Halbleiterschalter Teil der ersten Gleichrichterschaltung und der dritten Gleichrichterschaltung. Wird der zweite Umrichter über den Gleichspannungszwischenkreis des ersten Umrichters geladen, so wird die dritte Gleichrichterschaltung nicht zur Verbindung mit der Energieversorgung benötigt. Die dritte Gleichrichterschaltung, insbesondere die Halbleiterschalter der dritten Gleichrichterschaltung können daher im ersten Strompfad und/oder im zweiten Strompfad als Schalter genutzt werden.

Zur Verbindung der dreiphasigen Energieversorgung auf den ersten Umrichter werden nur drei wechselstromseitige Pole benötigt. Folglich ist einer der wechselstromseitigen Pole der ersten Gleichrichterschaltung oder der zweiten Gleichrichterschaltung unbelegt. Dieser wechselstromseitiger Pol, insbesondre der Halbleiterschalter des entsprechenden Phasenstrangs der Gleichrichterschaltung kann als Schalter zur Verbindung im ersten Strompfad oder zweiten Strompfad eingesetzt werden.

Diese bevorzugte Ausführungsform des Umrichters nutzt vorhandene, sonst nicht genutzte Halbleiterschalter als Schaltelemente im ersten und/oder zweiten Strompfad. Somit sind keine zusätzlichen Bauteile nötig, wodurch der Umrichter kompakter und kostengünstiger wird.

Des Weiteren erweist es sich vorteilhaft, dass die Halbleiterschalter einen Leitwiderstand aufweisen. Die Halbleiterschalter im ersten Strompfad oder zweiten Strompfad können zusätzlich zu ihrer Schaltfunktion der Dämpfung dienen. Durch seinen Leitwiderstand unterdrückt er Schwingungen zwischen dem ersten Gleichspannungszwischenkreis und dem zweiten Gleichspannungszwischenkreis, insbesondere zwischen dem möglicherweise vorhandenen Energiespeichervermögen der beiden Gleichspannungszwischenkreise. Dadurch entfällt der Bedarf separater Dämpfungswiderstände. Diese wiederum ermöglicht einen kompakteren und kostengünstigeren Stromrichter.

Gemäss einer weiteren, bevorzugten Ausführungsform des Stromrichters ist der erste Anschluss mit dem dritten wechselstromseitigen Pol zumindest verbindbar, der zweite Anschluss mit dem vierten wechselstromseitigen Pol zumindest verbindbar, und der dritte Anschluss mit dem ersten wechselstromseitigen Pol zumindest verbindbar.

Vorteilhaft erweist sich, dass die dreiphasige Energieversorgung auf den Stromrichter, insbesondere den ersten Umrichter, das heisst die erste Gleichrichterschaltung und die zweite Gleichrichterschaltung verbunden werden können. Da die Gleichrichterschaltungen gleichspannungsseitig parallel geschaltet sind, das heisst beide Gleichrichterschaltungen auf den ersten Gleichspannungszwischenkreis verbunden sind, bilden die drei wechselstromseitigen Pole der zwei Gleichrichterschaltungen, das heisst der erste wechselstromseitige Pol, der zweite wechselstromseitige Pol und der dritte wechselstromseitige Pol, je einen Phasenanschluss eines dreiphasigen Brückengleichrichters. Der erste Gleichspannungszwischenkreis wird also durch einen Sechspulsgleichrichter versorgt. Die Vorteile eines Sechspulsgleichrichters gegenüber anderen dreiphasigen Gleichrichtern, beispielsweise je einem Einweggleichrichter pro Phase der Energieversorgung, sind dem Fachmann bestens bekannt.

Gemäss einer weiteren, bevorzugten Ausführungsform des Stromrichters umfasst der erste Strompfad einen ersten Teilstrompfad, wobei über diesen ersten Teilstrompfad der erste gleichspannungsseitige Pol und der fünfte wechselstromseitige Pol zumindest verbindbar sind, und der zweite Strompfad umfasst einen zweiten Teilstrompfad, wobei über diesen zweiten Teilstrompfad der zweite wechselstromseitige Pol und der sechste wechselstromseitige Pol zumindest verbindbar sind.

Vorteilhaft erweist sich das der erste Teilstrompfad, wie auch der zweite Teilstrompfad, im ersten, beziehungsweise zweiten Strompfad die entsprechenden Pole der ersten Gleichrichterschaltung und der dritten Gleichrichterschaltung miteinander verbindet. Der erste Teilstrompfad und der zweite Teilstrompfad stellen also die Teile des ersten Strompfades, beziehungsweise des zweiten Strompfades dar, welche zwischen den Gleichrichterschaltungen verlaufen. Ist der erste Teilstrompfad, beziehungsweise der zweite Teilstrompfad verbindbar, ergibt sich daraus die vorteilhafte Eigenschaft, dass die Strompfade unabhängig vom Schaltzustand des/der Halbleiterschalter, das heisst beispielsweise unabhängig vom Schaltzustand der Gleichrichterschaltungen auftrennbar sind. Das heisst die Verbindung des ersten gleichspannungsseitigen Pols und des dritten gleichspannungsseitigen Pols, also der erste Strompfad, ist unabhängig von den Schaltzuständen der Halbleiterschalter im Phasenstrang des ersten wechselstromseitigen Poles auftrennbar. Analog dazu ist die Verbindung des zweiten gleichstromseitigen Poles und des vierten gleichstromseitigen Poles, also der zweite Strompfad, unabhängig von den Schaltzuständen der Halbleiterschalter im Phasenstrang des zweiten wechselstromseitigen Poles und der Halbleiterschalter im Phasenstrang des sechsten wechselstromseitigen Poles auftrennbar. Daraus ergibt sich die Möglichkeit die Verbindung der beiden Stromrichter zu trennen und die beiden Umrichter unabhängig voneinander zu nutzen.

Gemäss einer weiteren, bevorzugten Ausführungsform des Stromrichter umfasst der Stromrichter zusätzlich eine Schalteinheit, welche Schalteinheit für das Umschalten zwischen Schaltzuständen vorgesehen ist, wobei in einem ersten Schaltzustand die Schalteinheit den ersten Teilstrompfad schliesst und den zweiten Teilstrompfad schliesst, und in einem zweiten Schaltzustand die Schalteinheit mindestens den ersten Teilstrompfad oder den zweiten Teilstrompfad unterbricht.

Vorteilhaft erweist sich das durch die Schalteinheit die beiden Umrichter des Stromrichters miteinander verbunden oder voneinander getrennt werden können. Im ersten Schaltzustand sind der erste Umrichter und der zweite Umrichter, insbesondre die erste Gleichrichterschaltung und die dritte Gleichrichterschaltung durch die Schalteinheit, das heisst durch einen geschlossenen ersten Teilstrompfad und einen geschlossenen zweiten Teilstrompfad verbunden. Sind auch die Halbleiterschalter in den beiden Strompfaden geschlossen, so sind in diesem ersten Schaltzustand der erste Gleichspannungszwischenkreis und der zweite Gleichspannungszwischenkreis verbunden. Dieser erste Schaltzustand erlaubt die Versorgung des zweiten Gleichspannungszwischenkreises mit Energie aus dem ersten Gleichspannungszwischenkreis. Im zweiten Schaltzustand ist mindestens der erste Teilstrompfad oder der zweite Teilstrompfad geöffnet. Unabhängig der Schaltzustände der Halbleiterschalter kann in diesem Schaltzustande die Energieversorgung des zweiten Gleichspannungszwischenkreises nicht aus dem ersten Gleichspannungszwischenkreis erfolgen. Die erste Gleichrichterschaltung und die dritte Gleichrichterschaltung können in diesem Schaltzustand unabhängig voneinander betrieben werden.

Weiter erweist es sich vorteilhaft, dass sich durch die Schalteinheit herkömmliche einphasige Gleichrichterschaltungen auf einfache Weise so verschalten lassen, dass der Stromrichter mit einer dreiphasigen Energieversorgung betrieben werden kann. In anderen Worten ermöglicht die Schalteinheit die Versorgung des Stromrichters mit der dreiphasigen Energieversorgung, obwohl die Gleichrichterschaltungen als herkömmliche, einphasige Gleichrichterschaltungen ausgebildet sind. Das heisst, die herkömmlichen einphasigen Gleichrichterschaltungen können sowohl zum Aufbau eines Stromrichters für eine einphasige Energieversorgung verwendet werden, wie auch - dank der Schalteinheit - für den Aufbau eines Stromrichters für eine dreiphasige Energieversorgung verwendet werden. Die Schalteinheit erlaubt daher insofern eine Standardisierung verschiedener Stromrichter, dass die Stromrichter unbeachtet der Art der Energieversorgung - einphasig oder dreiphasig - mit den gleichen, herkömmlichen einphasigen Gleichrichterschaltungen ausgebildet werden kann. Dies führt zu Vereinfachungen in der Produktion und dadurch zu Kosteneinsparungen.

Gemäss einer weiteren, bevorzugten Ausführungsform des Stromrichters umfasst der Stromrichter zusätzlich einen vierten Anschluss und einen fünften Anschluss für die Verbindung des Stromrichters mit einer einphasigen Energieversorgung, wobei im ersten Schaltzustand die Schalteinheit den ersten Anschluss mit dem dritten wechselstromseitigen Pol verbindet, den zweiten Anschluss mit dem vierten wechselstromseitigen Pol verbindet, den dritten Anschluss mit dem ersten wechselstromseitigen Pol verbindet, wobei im zweiten Schaltzustand die Schalteinheit den ersten wechselstromseitigen Pol mit dem vierten Anschluss und den zweiten wechselstromseitigen Pol mit dem fünften Anschluss verbindet. Vorteilhaft erweist sich, dass der Stromrichter durch die Schalteinheit den ersten Umrichter wahlweise auf die Anschlüsse für eine dreiphasige Energieversorgung oder auf die Anschlüsse für eine einphasige Energieversorgung verbinden kann. Der Stromrichter kann in dieser Ausführungsform durch die Schalteinheit wahlweise mit unterschiedlichen Energieversorgungen betreiben werden. Im ersten Schaltzustand, also wenn der erste Umrichter auf die Anschlüsse für die dreiphasige Energieversorgung verbunden ist, kann die erste Gleichrichterschaltung und die zweite Gleichrichterschaltung, wie oben und im Folgenden beschrieben, als Sechspulsgleichrichterschaltung betrieben werden und den ersten Gleichspannungszwischenkreis so mit Energie aus der dreiphasigen Energieversorgung versorgen. In diesem Schaltzustand wird der zweite Umrichter, wie oben und im Folgenden beschrieben, mit Energie aus dem ersten Umrichter versorgt. Im zweiten Schaltzustand kann der erste Umrichter, insbesondere die erste Gleichrichterschaltung als Einphasengleichrichter, beispielsweise als Brückengleichrichter betrieben werden und den ersten Gleichspannungszwischenkreis so mit Energie aus der einphasigen Energieversorgung versorgen. Das Umschalten zwischen den Anschüssen kann auf Grund von der Verfügbarkeit der verschiedenen Energieversorgungen geschehen. Eine der Energieversorgungen, beispielsweise die einphasige Energieversorgung, kann vorzugsweise verwendet werden, wobei bei Unverfügbarkeit dieser bevorzugten Energieversorgung auf die andere Energieversorgung umgeschaltet werden kann. Sind beide Energieversorgungen verfügbar können weitere Kriterien das Umschalten beeinflussen.

Vorteilhaft erweist sich, dass durch die Schalteinheit der Stromrichter mit den herkömmlichen einphasigen Gleichrichterschaltungen wahlweise an einer dreiphasigen oder einphasigen Energieversorgung betrieben werden kann. In anderen Worten ermöglicht die Schalteinheit das Umschalten zwischen der einphasigen Energieversorgung und der dreiphasigen Energieversorgung, obwohl die Gleichrichterschaltungen der Umrichter durch herkömmliche, einphasige Gleichrichterschaltungen ausgebildet sind.

Gemäss einer weiteren, bevorzugten Ausführungsform des Stromrichters, verbindet die Schalteinheit im zweiten Schaltzustand den ersten wechselstromseitigen Pol und den dritten wechselstromseitigen Pol miteinander und verbindet den zweiten wechselstromseitigen Pol und den vierten wechselstromseitigen Pol miteinander.

Vorteilhaft erweist sich, dass im zweiten Schaltzustand die erste Gleichrichterschaltung und die zweite Gleichrichterschaltung wechselstromseitig parallel geschaltet sind. Der erste Gleichspannungszwischenkreis kann so gleichzeitig über die erste Gleichrichterschaltung und die zweite Gleichrichterschaltung versorgt werden, wodurch die verfügbare Leistung der Gleichrichter grösser ist oder die Nennleistung des einzelnen Gleichrichters kleiner ausfallen kann.

Gemäss einer weiteren, bevorzugten Ausführungsform des Stromrichters umfasst der Stromrichter einen sechsten Anschluss und einen siebten Anschluss für die Verbindung des Stromrichters mit der einphasigen Energieversorgung, wobei im zweiten Schaltzustand die Schalteinheit, den fünften wechselstromseitigen Pol mit dem sechsten Anschluss verbindet und den sechsten wechselstromseitigen Pol mit dem siebten Anschluss verbindet.

Vorteilhaft erweist sich, dass so im zweiten Schaltzustand der erste Umrichter und der zweite Umrichter, insbesondere der erste Gleichspannungszwischenkreis und der zweite Gleichspannungszwischenkreis gleichzeitig, direkt mit Energie aus den einphasigen Energieversorgungen versorgt werden können.

Gemäss einer weiteren, bevorzugten Ausführungsform des Stromrichters umfasst der zweite Umrichter eine vierte Gleichrichterschaltung, wobei die vierte Gleichrichterschaltung einen siebten wechselstromseitigen Pol und einen achten wechselstromseitigen Pol aufweist, wobei die dritte Gleichrichterschaltung und die vierte Gleichrichterschaltung gleichspannungsseitig parallel geschaltet und mit dem dritten gleichspannungsseitigen Pol und dem vierten gleichspannungsseitigen Pol verbunden sind, wobei die Schalteinheit im zweiten Schaltzustand den fünften wechselstromseitigen Pol und den siebten wechselstromseitigen Pol miteinander verbindet und den sechsten wechselstromseitigen Pol und den achten wechselstromseitigen Pol miteinander verbindet.

Vorteilhaft erweist sich, dass der zweite Umrichter gleichwertig zum ersten Umrichter ist, wodurch die oben und im Folgenden genannten Vorteile gleichermassen für den zweiten Umrichter gelten. Insbesondere sind im zweiten Schaltzustand die dritte Gleichrichterschaltung und die vierte Gleichrichterschaltung wechselstromseitig und gleichstromseitig parallel geschaltet, wodurch der zweite Gleichspannungszwischenkreis gleichzeitig über die erste Gleichrichterschaltung und zweite Gleichrichterschaltung versorgt werden kann. Der Betrieb des Stromrichters mit den einphasigen Energieversorgungen kann insbesondere in dieser Ausführungsform die bevorzugte Energieversorgung darstellen, welche sofern sie verfügbar ist, verwendet wird. In dieser Ausführungsform werden der erste und zweite Gleichspannungszwischenkreis je von zwei Brückengleichrichtern versorgt. Im ersten Schaltzustand hingegen werden der erste und zweite Gleichspannungszwischenkreis aus einem einzigen Sechspulsgleichrichter versorgt. Sind alle Gleichrichterschaltungen auf dieselbe Leistung ausgelegt, bedeutet dies eine geringere Leistung im ersten Schaltzustand im Vergleich zum zweiten Schaltzustand. Das heisst, die Schalteinheit wird vorzugsweise im zweiten Schaltzustand betrieben. Ist die einphasige Energieversorgung nicht verfügbar, kann die Schalteinheit durch Umschalten in den zweiten Schaltzustand den Stromrichter mit der dreiphasigen Energieversorgung verbinden. In diesem Schaltzustand findet die Energieversorgung des zweiten Umrichters, wie oben und im Folgenden beschrieben, indirekt statt.

Gemäss einer weiteren, bevorzugten Ausführungsform des Stromrichters ist mindestens eine der ersten Gleichrichterschaltung, zweiten Gleichrichterschaltung, dritten Gleichrichterschaltung oder vierten Gleichrichterschaltung als Vierquadrantensteller ausgebildet.

Vorteilhaft erweist sich, dass Vierquadrantensteller einen bidirektionalen Energiefluss erlauben und dieser die Magnetisierungsenergie der Energieversorgung, also einen Energiefluss vom Vierquadrantensteller zur Energieversorgung ermöglicht. Dreiphasige Energieversorgungen, insbesondere einige Formen von elektrischen Maschinen, beispielsweise Asynchronmaschinen, benötigen Magnetisierungsenergie. Ein derart ausgebildeter Stromrichter bietet daher Flexibilität bezüglich der anschliessbaren Energieversorgungsarten und erlaubt die Verwendung von robusten und kostengünstigen Asynchronmaschinen. Es erweist sich weiter als vorteilhaft, dass die Gleichrichterschaltung als Vierquadrantensteller bidirektional ausgeführt ist, da dadurch der Stromrichter, Energie rekuperieren kann, das heisst Energie der lastseitigen elektrischen Maschine, beispielsweise Bremsenergie, in die einphasige Energieversorgung speisen kann. Gemäss einer weiteren, bevorzugten Ausführungsform des Stromrichters umfasst die Schalteinheit elektromechanische Umschalter zum Umschalten zwischen dem ersten Schaltzustand und dem zweiten Schaltzustand.

Vorteilhaft erweist sich, dass die Schalteinheit somit als ein separates Untermodul des Stromrichters, bestehend aus einer Vielzahl von elektromechanischen Umschaltern, einfach aufgebaut und verdrahtet werden kann. Durch diese Schalteinheit lassen sich herkömmliche einphasige Gleichrichterschaltungen auf eine kostengünstige und einfache Weise so verschalten, dass der Umrichter auch mit einer dreiphasigen Energieversorgung betrieben werden kann. Durch die Schalteinheit lässt sich der Stromrichter mit herkömmlichen einphasigen, bidirektionalen Gleichrichterschaltungen wahlweise mit einer dreiphasigen Energieversorgung, beispielsweise einer Asynchronmaschine oder mit einer einphasigen Energieversorgung, beispielsweise einem Bahnstromnetz betreiben. Die Schalteinheit ermöglicht das einfache Umschalten zwischen diesen Energieversorgungen.

Erfindungsgemäss ist eine Antriebseinheit vorgesehen, welche Antriebseinheit einen Stromrichter, wie oben und im Folgenden beschrieben umfasst, einen ersten Gleichspannungszwischenkreise umfasst, welcher erster Gleichspannungszwischenkreis mit dem ersten gleichspannungsseitigen Pol und dem zweiten gleichspannungsseitigen Pol verbunden ist, und einen zweiten Gleichspannungszwischenkreise umfasst, welcher zweiter Gleichspannungszwischenkreis mit dem dritten gleichspannungsseitigen Pol und dem vierten gleichspannungsseitigen Pol verbunden ist, eine dreiphasige Energieversorgung umfasst, welche dreiphasige Energieversorgung mit dem ersten Anschluss, dem zweiten Anschluss und dem dritten Anschluss verbunden ist.

Gemäss einer weiteren, bevorzugten Ausführungsform der Antriebseinheit sind der erste Gleichspannungszwischenkreis und der zweite Gleichspannungszwischenkreis als kapazitive Gleichspannungszwischenkreise ausgebildet.

Vorteilhaft erweist sich, dass der erste Umrichter und der zweite Umrichter als Spannungsquellenumrichter ausgebildet sind. Dem Fachmann sind die Vorteile eines Spannungsquellenumrichters bestens bekannt.

Gemäss einer weiteren, bevorzugten Ausführungsform der Antriebseinheit ist die dreiphasige Energieversorgung als Asynchrongenerator ausgebildet.

Vorteilhaft erweist sich, dass Asynchronmaschinen robust, standardmässig mit verschiedensten technischen Kenngrössen, insbesondere Nennleistungen erhältlich und kostengünstig sind.

Gemäss einer weiteren, bevorzugten Ausführungsform umfasst die Antriebseinheit zusätzlich die einphasige Energieversorgung, wobei die einphasige Energieversorgung als Transformator ausgebildet ist, wobei der Transformator eine erste Sekundärwicklung zum Abgriff einer ersten Sekundärspannung umfasst, wobei der vierte Anschluss mit einem ersten Abgang der ersten Sekundärwicklung verbunden ist und der fünfte Anschluss mit einem zweiten Abgang der ersten Sekundärwicklung verbunden ist.

Vorteilhaft erweist sich, dass die Antriebseinheit dadurch mit der Primärseite des Transformators direkt an ein Versorgungsnetz, beispielsweise ein Mittelspannungsversorgungsnetz anschliessen lässt.

Gemäss einer weiteren, bevorzugten Ausführungsform der Antriebseinheit umfasst der Transformator eine zweite Sekundärwicklung zum Abgriff einer zweiten Sekundärspannung, wobei der sechste Anschluss auf einen ersten Abgang der zweiten Sekundärwicklung verbunden ist und der siebte Anschluss auf einen zweiten Abgang der zweiten Sekundärwicklung verbunden ist.

Vorteilhaft erweist sich, dass bei zwei Sekundärwicklungen die einzelnen Wicklungen für eine geringere Leistung ausgelegt werden muss und dass eine einfachere Verdrahtung mit den Umrichtern ermöglicht wird.

Gemäss einer weiteren, bevorzugten Ausführungsform der Antriebseinheit weisen die erste sekundäre Spannung und die zweite sekundäre Spannung dieselben elektrischen Charakteristiken auf.

Vorteilhaft erweist sich, dass der Transformator dadurch einfach ausgeführt werden kann und dennoch Redundanz bietet.

Gemäss einer weiteren, bevorzugten Ausführungsform der Antriebseinheit ist der erste Gleichspannungszwischenkreis über einen ersten Wechselrichter mit der ersten elektrischen Maschine verbunden und der zweite Gleichspannungszwischenkreis über einen zweiten Wechselrichter mit der zweiten elektrischen Maschine verbunden.

Vorteilhaft erweist sich, dass sowohl der erste Umrichter und die erste elektrische Maschine, als auch der zweite Umrichter und die zweite elektrische Maschine je eine unabhängige Unterantriebseinheit bilden. Ein Ausfall einer Unterantriebseinheit hat keinen direkten Einfluss auf die andere Unterantriebseinheit. Der Betrieb der Antriebseinheit ist mit nur einer Unterantriebseinheit möglich, obwohl die Antriebsleistung durch das Wegfallen einer Unterantriebseinheit verringert wird.

Als vorteilhaft erweist es sich, dass die Schalteinheit so ausgebildet ist, dass die dreiphasige Energieversorgung sowohl auf die Gleichrichterschaltungen des ersten Umrichters als auch auf die Gleichrichterschaltungen des zweiten Umrichters verbunden werden kann. In anderen Worten, erweist es sich als vorteilhaft, dass die Schalteinheit so ausgebildet ist, dass sie im zweiten Schaltzustand zwischen zwei Unterschaltzuständen umschalten kann, wobei der erste Unterschaltzustand die Anschlüsse für die dreiphasige Energieversorgung auf die wechselstromseitigen Pole des ersten Umrichters verbindet und wobei die Schalteinheit im zweiten Unterschaltzustand die Anschlüsse für die dreiphasige Energieversorgung auf die wechselstromseitigen Pole des zweiten Umrichters verbindet. So kann beim Ausfall einer oder beider Gleichrichterschaltungen des einen Umrichters auf den anderen Umrichter umgeschaltet werden und die Versorgung beider elektrischen Maschinen weiterhin gewährleistet werden.

Gemäss einer weiteren, bevorzugten Ausführungsform der Antriebseinheit ist die Antriebseinheit zum Antreiben eines Fahrzeuges vorgesehen, wobei das Fahrzeug spurgeführt ist.

Vorteilhaft erweist sich, dass durch die Antriebseinheit das Fahrzeug sowohl mit einer einphasigen Energieversorgung, beispielsweise mit einem 15 kV, 16 2/3 Hz Bahnstromnetz als auch mit einer dreiphasigen Energieversorgung verbunden werden kann und bei Bedarfbeispielsweise beim Ausfall der einphasigen Energieversorgungen oder beim Befahren einer nicht elektrifizierten Strecke - auf die dreiphasige Energieversorgung, beispielsweise auf einen Fahrzeug internen Dieselgenerator, welcher eine dreiphasige Asynchronmaschine antreibt, umgeschaltet werden kann. Weiter erweist es sich als vorteilhaft, dass auch bei Ausfall einer Unterantriebseinheit das Fahrzeug durch die andere Unterantriebseinheit weiter angetrieben werden kann, um beispielsweise das Fahrzeug an einen Ort zu fahren, wo Reparaturen ausgeführt werden können, also beispielsweise auf ein Abstellgleis.

Die Zeichnungen zeigen rein schematisch
in Fig. 1 ein erstes Ausführungsbeispiel eines erfindungsgemässen Stromrichters; und
in Fig. 2 ein zweites Ausführungsbeispiel eines erfindungsgemässen Stromrichters wie auch eines erfindungsgemässen Fahrzeugs.

In den Figuren werden gleiche oder gleichwirkende Bauteile oder Elemente mit denselben Bezugszeichen bezeichnet, wobei auf eine mehrmalige Beschreibung dieser gleichwirkenden Bauteile und Elementen verzichtet wird.

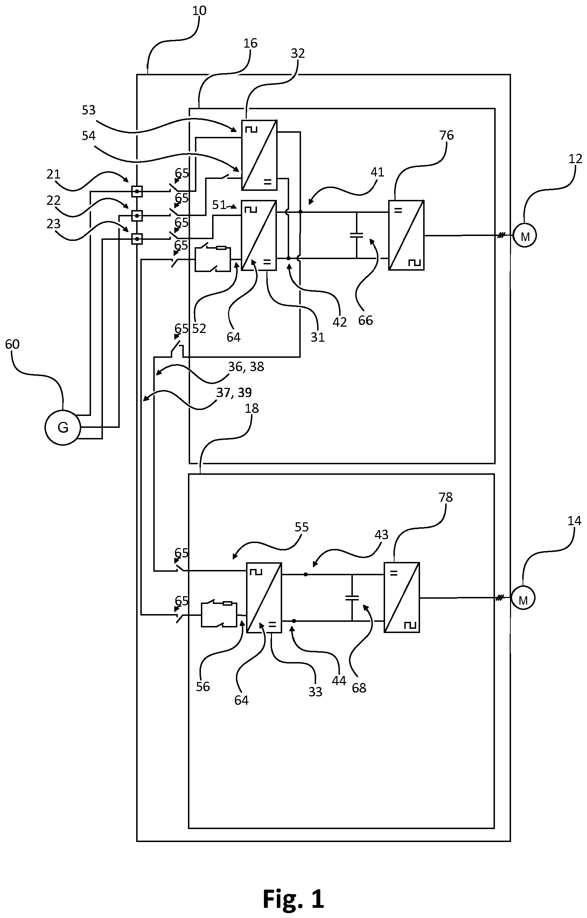

Fig. 1 zeigt einen Stromrichter 10 zum Betreiben einer ersten elektrischen Maschine 12 und einer zweiten elektrischen Maschine 14. Die elektrischen Maschinen 12, 14, das heisst die erste elektrische Maschine 12 und die zweite elektrische Maschine 14, können als Gleichstrom- oder Wechselstrommaschinen ausgebildet sein, wobei alle dem Fachmann bekannten Ausführungsformen von Gleichstrom- und Wechselstrommaschine Anwendung finden können. Es kann sich dabei um einphasige oder mehrphasige, insbesondre dreiphasige Maschinen handeln, wie in Fig. 1 gezeigt ist. Die elektrischen Maschinen 12, 14 können insbesondere Asynchronmaschinen sein.

Der Stromrichter 10 umfasst weiter einen ersten Umrichter 16, einen zweiten Umrichter 18, sowie einen ersten Anschluss 21, einen zweiten Anschluss 22 und einen dritten Anschluss 23 für die Verbindung des Stromrichters 10 mit einer dreiphasigen Energieversorgung 60. Die Anschlüsse 21, 22, 23, das heisst Anschluss 21, Anschluss 22 und Anschluss 23, sind dazu vorgesehen den Stromrichter 10 mit der Energieversorgung 60 elektrisch zu verbinden und dadurch einen Energiefluss von der dreiphasigen Energieversorgung 60 zum Stromrichter 10 zu ermöglichen.

Der erste Umrichter 16 umfasst eine erste Gleichrichterschaltung 31 und eine zweite Gleichrichterschaltung 32. Der zweite Umrichter 18 umfasst eine dritte Gleichrichterschaltung 33. Die erste Gleichrichterschaltung 31 weist einen ersten wechselstromseitigen Pol 51 und einen zweiten wechselstromseitigen Pol 52 auf. Die zweite Gleichrichterschaltung 32 weist einen dritten wechselstromseitigen Pol 53 und einen vierten wechselstromseitigen Pol 54 auf. Die dritte Gleichrichterschaltung 33 weist einen fünften wechselstromseitigen Pol 55 und einen sechsten wechselstromseitigen Pol 56 auf. Die erste Gleichrichterschaltung 31, die zweite Gleichrichterschaltung 32 und die dritte Gleichrichterschaltung 33, können beispielsweise als Zweipulsbrückenschaltungen ausgeführt sein.

Wie in Fig. 1 gezeigt ist, sind die erste Gleichrichterschaltung 31 und die zweite Gleichrichterschaltung 32 gleichspannungsseitig parallel geschaltet und hierzu mit einem gemeinsamen ersten gleichspannungsseitigen Pol 41 und einem gemeinsamen zweiten gleichspannungsseitigen Pol 42 verbunden. In anderen Worten, wie in Fig. 1 gezeigt ist, ist ein erster gleichstromseitiger Pol der ersten Gleichrichterschaltung 31 auf den ersten gleichspannungsseitigen Pol 41 verbunden und ein erster gleichspannungsseitiger Pol der zweiten Gleichrichterschaltung 32 ist auch auf den ersten gleichspannungsseitigen Pol 41 verbunden. Ein zweiter gleichspannungsseitiger Pol der ersten Gleichrichterschaltung 31 ist auf den zweiten gleichspannungsseitigen Pol 42 verbunden und ein zweiter gleichspannungsseitiger Pol 42 der zweiten Gleichrichterschaltung 32 ist auch auf den zweiten gleichspannungsseitigen Pol 42 verbunden. Die dritte Gleichrichterschaltung 33 ist gleichspannungsseitig auf einen dritten gleichspannungsseitigen Pol 43 und einen vierten gleichspannungsseitigen Pol 44 verbunden. In anderen Worten ist ein erster gleichspannungsseitiger Pol der dritten Gleichrichterschaltung 33 auf den dritten gleichspannungsseitigen Pol 43 verbunden und ein zweiter gleichspannungsseitiger Pol der dritten Gleichrichterschaltung 33 auf den vierten gleichspannungsseitigen Pol 44 verbunden.

Erfindungsgemäss ist der erste gleichspannungsseitige Pol 41 mit dem dritten gleichspannungsseitigen Pol 43 über einen ersten Strompfad 36 zumindest verbindbar. Der zweite gleichspannungsseitige Pol 42 ist mit dem vierten gleichspannungsseitigen Pol 44 über einen zweiten Strompfad 37 zumindest verbindbar. Der erste Strompfad (36) und der zweite Strompfad (38) umfassen einen Halbleiterschalter 64.

Wie in Fig. 1 gezeigt ist, kann der erste Strompfad 36 einen Halbleiterschalter 64 umfassen, welcher Teil der dritten Gleichrichterschaltung 33 ist. Der zweite Strompfad 37 kann einen Halbleiterschalter 64 umfassen, welcher Teil der ersten Gleichrichterschaltung 31 ist und einen weiteren Halbleiterschalter 64 umfassen, welcher Teil der dritten Gleichrichterschaltung 33 ist.

Der Halbleiterschalter 64 kann als IGBT, IGCT, Diode, Thyristor oder als ein anderer, dem Fachmann bekannten, Leistungshalbleiterschalter ausgebildet sein.

In dem Ausführungsbeispiel gemäss Fig.1 umfassen die Strompfade 36, 37 je einen Halbleiterschalter 64. In diesem Ausführungsbeispiel umfasst der dritte Gleichrichter 33 den Halbleiterschalter 64 des ersten Strompfades 36 und der erste Gleichrichter 31 den Halbleiterschalter 64 des zweiten Strompfades 37.

Die Strompfade 36, 37 können mehrere Schaltelemente umfassen. Die Strompfade 36, 37 können mechanische Schalter und Halbleiterschalter 64 im selben Strompfad aufweisen, wie diese für den ersten Strompfad 36 und den zweiten Strompfade 37 in Fig. 1 gezeigt ist.

Der Halbleiterschalter 64 ist Teil der ersten Gleichrichterschaltung 31 und der dritten Gleichrichterschaltung 33.

In Fig. 1 führt der erste Strompfad 36 über einen elektromechanische Schalter 65' und über einen Halbleiterschalter 64 der dritten Gleichrichterschaltung 33, welcher Halbeiterschalter 64 beispielsweise durch einen IGBT und eine antiparallel Diode ausgebildet ist. Der zweite Strompfad 37 führt über einen Halbleiterschalter 64 der ersten Gleichrichterschaltung 31 und über einen Halbleiterschalter 64 der dritten Gleichrichterschaltung 33, wobei beide Halbleiterschalter 64 beispielsweise durch einen IGBT mit antiparalleler Diode ausgebildet sind und einen elektromechanische Schalter 65".

Der erste Anschluss 21 ist mit dem dritten wechselstromseitigen Pol 53 zumindest verbindbar. Der zweite Anschluss 22 ist mit dem vierten wechselstromseitigen Pol 54 zumindest verbindbar und der dritte Anschluss 23 ist mit dem ersten wechselstromseitigen Pol 51 zumindest verbindbar. Die Anschlüsse 21, 22, 23 können je über einen Schalter 65, beispielsweise über einen elektromechanischen Schalter 65, auf den jeweiligen wechselstromseitigen Pol 51, 53, 54 verbunden werden, wie in Fig.1 gezeigt ist.

Der erste Strompfad 36 umfasst einen ersten Teilstrompfad 38. Über diesen ersten Teilstrompfad 38 sind der erste gleichspannungsseitige Pol 41 und der fünfte wechselstromseitige Pol 55 zumindest verbindbar.

Der zweite Strompfad 37 umfasst einen zweiten Teilstrompfad 39. Über diesen zweiten Teilstrompfad 39 sind der zweite wechselstromseitige Pol 52 und der sechste wechselstromseitige Pol 56 zumindest verbindbar.

Der erste Teilstrompfad 38 und der zweite Teilstrompfad 39 können elektromechanische Schalter 65 beinhalten, wie in Fig. 1 gezeigt ist.

In einem weiteren Ausführungsbeispiel kann einem oder mehreren der wechselstromseitigen Pole 51, 52, 53, 54, 55, 56, 57, 58 eine Vorladeeinheit, das heisst, eine Parallelschaltung aus in Serie geschaltetem Vorladewiderstand und Schalter und einem Schalter, vorgeschalten sein. Diese Vorladeeinheit bezweckt eine sichere, das heisst gedämpfte Aufladung des Energiespeichers des Gleichspannungszwischenkreises. In einem Ausführungsbeispiel enthält jeder der beiden Umrichter 16, 18 mindestens eine Vorladeeinheit, wie in Fig.1 gezeigt ist. Alternativ kann einem oder mehreren der wechselstromseitigen Polen 51, 52, 53, 54, 55, 56, 57, 58 ein Schalter vorgeschalten sein. Mit diesem Schalter kann der zur entsprechenden Gleichrichterschaltung führende Stromkreis unterbrochen werden. Mit anderen Worten kann die Gleichrichterschaltung von der entsprechenden Energieversorgung getrennt werden. Beispielsweise kann den wechselstromseitigen Polen 54, 58 ein Schalter vorgeschalten sein, wie dies in Fig. 1 gezeigt ist. Gleichrichterschaltungen ohne vorgeschaltete Vorladeeinrichtung weisen vorzugsweise einen solchen Schalter auf, damit jede der Gleichrichterschaltungen 31, 32, 33, 34 von der Energieversorgung getrennt werden kann.

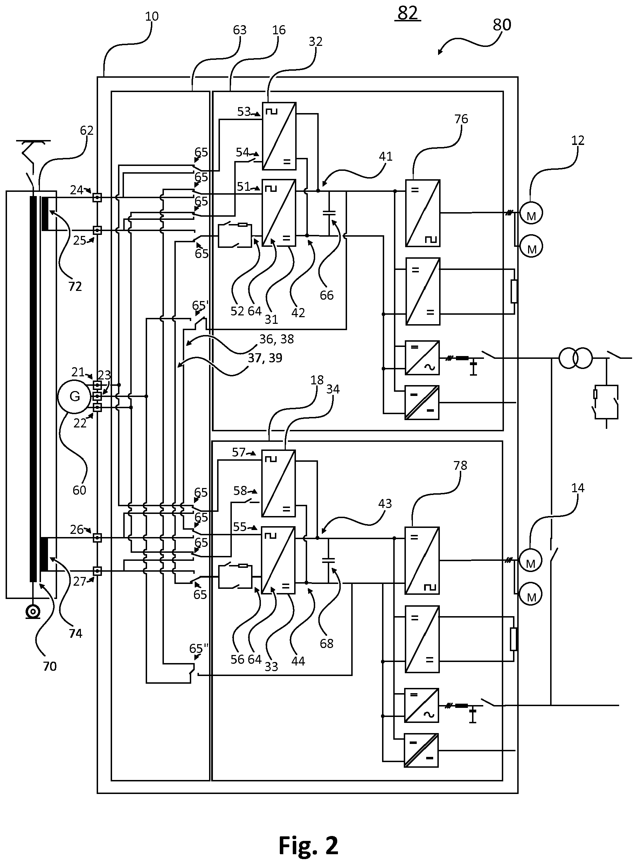

Fig. 2 zeigt einen Stromrichter 10, welcher zusätzlich eine Schalteinheit 63 umfasst. Diese Schalteinheit 63 ist für das Umschalten zwischen Schaltzuständen vorgesehen. In einem ersten Schaltzustand, welcher dem in Fig. 2 dargestellten Zustand entspricht, schliesst die Schalteinheit 63 den ersten Teilstrompfad 38 und den zweiten Teilstrompfad 39. In anderen Worten, besteht in einem ersten Schaltzustand eine elektrische Verbindung zwischen dem ersten gleichspannungsseitigen Pol 41 und dem fünften wechselstromseitigen Pol 55 und eine elektrische Verbindung zwischen dem zweiten wechselstromseitigen Pol 52 und dem sechsten wechselstromseitigen Pol 56. Dank den Verbindungen der Schalteinheit 63 im ersten Schaltzustand besteht die Möglichkeit in Abhängigkeit der Schaltzustände der Halbleiterschalter 64 die Strompfade 36, 37 zu schliessen und dadurch einen Energieaustausch zwischen dem ersten Gleichspannungszwischenkreis 66 und dem zweiten Gleichspannungszwischenkreis 68 zu ermöglichen. Der Leitwiderstand des einen oder der mehreren Halbleiterschalter 64 in den Strompfaden 36, 37 und der Leitwiderstand der Verbindungsleitungen, wie auch allfällige Schalter 65 können weiter als Dämpfung gegen Schwingungen zwischen den Gleichspannungszwischenkreisen 66, 68 dienen.

In einem weiteren Ausführungsbeispiel umfasst der Stromrichter 10 zusätzlich einen vierten Anschluss 24 und einen fünften Anschluss 25 für die Verbindung des Stromrichters 10 mit einer einphasigen Energieversorgung 62. Im ersten Schaltzustand, welcher dem in Fig. 2 dargestellten Zustand entspricht, verbindet die Schalteinheit 63 den ersten Anschluss 21 mit dem dritten wechselstromseitigen Pol 53, den zweiten Anschluss 22 mit dem vierten wechselstromseitigen Pol 54, den dritten Anschluss 23 mit dem ersten wechselstromseitigen Pol 51, wie in Fig. 2 gezeigt ist. Dieser Schaltzustand ermöglicht es dem Stromrichter 10 Energie aus der dreiphasigen Energieversorgung 60 zu beziehen. Der erste Gleichspannungszwischenkreis 66 kann in diesem Schaltzustand über die wechselstromseitigen Pole 51, 53, 54 und die entsprechenden Phasenstränge der Gleichrichterschaltungen 31, 32 mit Energie aus der dreiphasigen Energieversorgung 60 geladen werden.

Vom ersten Gleichspannungszwischenkreis 66 aus gesehen bildet der erste wechselstromseitige Pol 51 mit dem entsprechenden Phasenstrang der ersten Gleichrichterschaltung 31, der dritte wechselstromseitige Pol 53 mit dem entsprechenden Phasenstrang der zweiten Gleichrichterschaltung 32 und der vierte wechselstromseitige Pol 54 mit dem entsprechenden Phasenstrang der zweiten Gleichrichterschaltung 32 eine dreiphasige Gleichrichterschaltung, beispielsweise eine Sechspulsgleichrichter. Im zweiten Schaltzustand verbindet die Schalteinheit 63 den ersten wechselstromseitigen Pol 51 mit dem vierten Anschluss 24 und den zweiten wechselstromseitigen Pol 52 mit dem fünften Anschluss 25. Dieser Schaltzustand ermöglicht es dem Stromrichter 10, insbesondere dem ersten Umrichter 16 über die erste Gleichrichterschaltung 31 Energie aus der einphasigen Eneraieversorauna 62 zu beziehen. Der erste Gleichspannungszwischenkreis 66 kann in diesem Schaltzustand über die wechselstromseitigen Pole 51, 52 und die erste Gleichrichterschaltung 31 mit Energie aus der einphasigen Energieversorgung 62 versorgt werden. Vom ersten Gleichspannungszwischenkreis 66 aus gesehen bildet der erste wechselstromseitige Pol 51 mit dem entsprechenden Phasenstrang der ersten Gleichrichterschaltung 31 und der zweite wechselstromseitige Pol 52 mit dem entsprechenden Phasenstrang der ersten Gleichrichterschaltung 31 einen Gleichrichter, beispielsweise einen Brückengleichrichter.

Der Umrichter kann also abhängig vom Schaltzustand der Schalteinheit 63 von einer einphasigen Energieversorgung 62 oder einer dreiphasigen Energieversorgung 60 versorgt werden. Beispielsweise kann die einphasige Energieversorgung als Energieversorgung mit Energiebezug aus der Oberleitung ausgeführt sein und die dreiphasige Energieversorgung 60 eine autonome Energieversorgung, ohne Verbindung mit einem übergeordneten Netz, darstellen. Beispielsweise kann, in Abhängigkeit der Verfügbarkeit der Energieversorgungen, zwischen den Energieversorgungen, beziehungsweise den Schaltzuständen, umgeschaltet werden.

In einem weiteren Ausführungsbeispiel verbindet die Schalteinheit 63 im zweiten Schaltzustand zusätzlich den ersten wechselstromseitigen Pol 51 und den dritten wechselstromseitigen Pol 53 miteinander und den zweiten wechselstromseitigen Pol 52 und den vierten wechselstromseitigen Pol 54 miteinander, wie in Fig. 2 gezeigt. Dieses Ausführungsbeispiel des zweiten Schaltzustandes ermöglicht es dem Stromrichter 10, insbesondere dem ersten Umrichter 16 über die erste Gleichrichterschaltung 31 und die zweite Gleichrichterschaltung 32 Energie aus der einphasigen Energieversorgung 62 zu beziehen. Die erste Gleichrichterschaltung 31 und die zweite Gleichrichterschaltung 32 sind in diesem Schaltzustand wechselstromseitig und gleichstromseitig elektrisch parallel geschaltet.

In einem weiteren Ausführungsbeispiel umfasst der Stromrichter 10 einen sechsten Anschluss 26 und einen siebten Anschluss 27 für die Verbindung des Stromrichters 10 mit der einphasigen Energieversorgung 62. Im zweiten Schaltzustand verbindet die Schalteinheit 63, den fünften wechselstromseitigen Pol 55 mit dem sechsten Anschluss 26 und den sechsten wechselstromseitigen Pol 56 mit dem siebten Anschluss 27, wie in Fig. 2 gezeigt ist. Dieses Ausführungsbeispiel ermöglicht es dem Stromrichter 10, den ersten Umrichter 16 als auch den zweiten Umrichter 18 gleichzeitig über die entsprechenden Gleichrichterschaltungen mit Energie aus der einphasigen Energieversorgung 62 zu versorgen.

In einem Ausführungsbeispiel des Stromrichters 10 umfasst der zweite Umrichter 18 eine vierte Gleichrichterschaltung 34, wie in Fig. 2 gezeigt ist. Die vierte Gleichrichterschaltung 34 weist einen siebten wechselstromseitigen Pol 57 und einen achten wechselstromseitigen Pol 58 auf. Die dritte Gleichrichterschaltung 33 und die vierte Gleichrichterschaltung 34 sind gleichspannungsseitig parallel geschaltet und mit dem dritten gleichspannungsseitigen Pol 43 und dem vierten gleichspannungsseitigen Pol 44 verbunden. In diesem Ausführungsbeispiel verbindet die Schalteinheit 63 im zweiten Schaltzustand den fünften wechselstromseitigen Pol 55 und den siebten wechselstromseitigen Pol 57 miteinander und den sechsten wechselstromseitigen Pol 56 und den achten wechselstromseitigen Pol 58 miteinander. Dieses Ausführungsbeispiel ermöglicht es dem Stromrichter 10, insbesondere dem zweiten Umrichter 18 gleichzeitig über die dritte Gleichrichterschaltung 33 und die vierte Gleichrichterschaltung 34 Energie aus der einphasigen Energieversorgung 62 zu beziehen. Die dritte Gleichrichterschaltung 33 und die vierte Gleichrichterschaltung 34 sind im zweiten Schaltzustand dieses Ausführungsbeispiels sowohl gleichstromseitig, wie auch wechselstromseitig elektrisch parallel geschaltet.

In einem weiteren Ausführungsbeispiel des Stromrichters 10 ist mindestens eine der ersten Gleichrichterschaltung 31, zweiten Gleichrichterschaltung 32, dritten Gleichrichterschaltung 33 oder vierten Gleichrichterschaltung 34 als Vierquadrantensteller ausgebildet. Der Vierquadrantensteller ermöglicht einen bidirektionalen Energiefluss, das heisst sowohl einen Energietransfer von der Gleichstromseite zur Wechselstromseite, wie auch einen Energietransfer in die umgekehrte Richtung, das heisst von der Wechselstromseite zur Gleichstromseite. Dadurch ermöglicht der Vierquadrantensteller unter anderem die Magnetisierung der Energieversorgung an welcher er angeschlossen ist, insbesondere die Magnetisierung eines Generators, beispielsweise eines Asynchrongenerators. Weiter ermöglicht der bidirektionale Vierquadrantensteller dem Stromrichter 10 Energie in die Energieversorgung zu rekuperieren. In anderen Worten, ermöglicht es der Vierquadrantensteller dem Stromrichter 10 Energie der lastseitigen Maschinen 12, 14 der Energieversorgung zu Verfügung zu stellen. Diese Energie wird im Generatorbetrieb der Maschinen 12, 14 bereitgestellt, beispielsweise während einem Bremsvorgang der Maschinen 12, 14 und kann durch den Stromrichter 10 beispielsweise in die, als Bahnstromnetz ausgebildete einphasige Energieversorgung 62 rekuperiert werden.

In einem weiteren Ausführungsbeispiel des Stromrichters 10 umfasst die Schalteinheit 63 elektromechanische Umschalter 65 zum Umschalten zwischen dem ersten Schaltzustand und dem zweiten Schaltzustand. Die Umschalter umfassen beispielsweise drei Anschlüsse, wobei beim Schaltvorgang die Verbindung zwischen dem ersten Anschluss und dem zweiten Anschluss geöffnet und die Verbindung zwischen dem ersten Anschluss und dem dritten Anschluss geschlossen wird.

In einem Ausführungsbeispiel ist jeder der wechselstromseitigen Pole 51, 52, 53, 54, 55, 56, 57, 58 auf einen Umschalter verbunden, wie in Fig. 2 gezeigt ist. Der zweite Anschluss und der dritte Anschluss der Umschalter sind verbunden, um die oben und im Weiteren erwähnten Verbindungen herzustellen, wie in Fig. 2 gezeigt ist. Die Schliessung des ersten Teilstrompfades 38 im ersten Schaltzustand kann durch einen weiteren Umschalter 65' bezweckt werden, wie in Fig. 2 gezeigt ist. Alternativ kann diese Verbindung auch als einfacher Schalter ausgebildet sein.

In einem weiteren Ausführungsbeispiel mit den vier Gleichrichterschaltungen 31, 32, 33, 34 sind die Schalter 65' und Schalter 65" als Umschalter ausgebildet, wie in Fig. 2 gezeigt ist. Zusammen ermöglichen die Umschalter 65' und 65" im ersten Schaltzustand die dreiphasige Energieversorgung 60 wahlweise auf den ersten Umrichter 16 oder den zweiten Umrichter 18 zu verbinden und stellen dabei sicher, dass in beiden Fällen die Energiespeicher des ersten Gleichspannungszwischenkreises 66 und des zweiten Gleichspannungszwischenkreises 68 miteinander verbindbar sind. Im ersten Schaltzustand der Schalteinheit 63 verbindet dazu der Umschalter 65' den fünften wechselstromseitigen Pol 55 wahlweise mit dem ersten gleichspannungsseitigen Pol 41 oder dem dritten Anschluss 23. Der Umschalter 65" verbindet im ersten Schaltzustand den wechselstromseitigen Pol 51 wahlweise mit dem vierten gleichspannungsseitigen Pol 44 oder dem dritten Anschluss 23. Befindet sich die Schalteinheit 63 im ersten Schaltzustand und der Umschalter 65' im Schaltzustand in dem er den fünften wechselstromseitigen Pol 55 mit dem dritten Anschluss 23 verbindet und der Umschalter 65" im Schaltzustand in dem er den ersten wechselstromseitigen Pol 51 mit dem vierten gleichstromseitigen Pol 44 verbindet, wird der zweite Umrichter 18, insbesondere der zweite Gleichspannungszwischenkreis 68 mit Energie aus der dreiphasigen Energieversorgung 60 versorgt. Der erste Umrichter 16, insbesondere der erste Gleichspannungszwischenkreis 66, kann in diesem Schaltzustand durch die Schliessung des ersten Strompfades 36 und des zweiten Strompfades 37 indirekt, das heisst nicht aus der Energieversorgung 60 sondern aus dem zweiten Gleichspannungszwischenkreis 68 mit Energie versorgt werden. Befindet sich die Schalteinheit 63 im ersten Schaltzustand und der Umschalter 65' hingegen im Schaltzustand in dem er den fünften wechselstromseitigen Pol 55 mit dem ersten gleichstromseitigen Pol 41 verbindet und der Umschalter 65" hingegen im Schaltzustand in dem er den ersten wechselstromseitigen Pol 51 mit dem dritten Anschluss verbindet, wird der erste Umrichter 16, insbesondere der erste Gleichspannungszwischenkreis 66 mit Energie aus der dreiphasigen Energieversorgung 60 versorgt. Der zweite Umrichter 18, insbesondere der zweite Gleichspannungszwischenkreis 68, kann in diesem Schaltzustand durch die Schliessung des ersten Strompfades 36 und des zweiten Strompfades 37 indirekt, das heisst nicht aus der Energieversorgung 60 sondern aus dem ersten Gleichspannungszwischenkreis 66 mit Energie versorgt werden.

Weiter zeigt Fig. 2 eine Antriebseinheit 80, welche den Stromrichter 10 umfasst. Die Antriebseinheit umfasst weiter einen ersten Gleichspannungszwischenkreise 66. Der Gleichspannungszwischenkreis 66 ist mit dem ersten gleichspannungsseitigen Pol 41 und dem zweiten gleichspannungsseitigen Pol 42 verbunden. Die Antriebseinheit umfasst auch einen zweiten Gleichspannungszwischenkreise 68. Der zweite Gleichspannungszwischenkreis 68 ist mit dem dritten gleichspannungsseitigen Pol 43 und dem vierten gleichspannungsseitigen Pol 44 verbunden ist. Weiter umfasst die Antriebseinheit die dreiphasige Energieversorgung 60. Die dreiphasige Energieversorgung 60 ist mit dem ersten Anschluss 21, dem zweiten Anschluss 22 und dem dritten Anschluss 23 verbunden.

In einem Ausführungsbeispiel der Antriebseinheit 80 sind der erste Gleichspannungszwischenkreis 66 und der zweite Gleichspannungszwischenkreis 68 als kapazitive Gleichspannungszwischenkreise ausgebildet, wie in Fig. 2 gezeigt ist. Die Gleichspannungszwischenkreise 66, 68 haben im Wesentlichen die Aufgabe eines Energiepuffers, also Energiespeichers. Dem Fachmann sind gängige Ausführungsformen von Energiespeichern bekannt, wobei diese Ausführungsform in der Erfindung Anwendung finden können. Die Gleichspannungszwischenkreise 66, 68 können alternativ beispielsweise als Stromzwischenkreis ausgeführt sein.

In einem Ausführungsbeispiel der Antriebseinheit 80 ist die dreiphasige Energieversorgung 60 als Asynchrongenerator ausgebildet. In diesem Ausführungsbeispiel ist mindestens eine der Gleichrichterschaltungen 31, 32, 33, 34 als Vierquadrantensteller ausgebildet. Der mindestens eine Vierquadrantensteller erlaubt es den Asynchrongenerator zu magnetisieren.

In einem weiteren Ausführungsbeispiel umfasst die Antriebseinheit 80 zusätzlich die einphasige Energieversorgung 62. Die einphasige Energieversorgung 62 ist als Transformator 70 ausgebildet. Der Transformator 70 umfasst eine erste Sekundärwicklung 72 zum Abgriff einer ersten Sekundärspannung. Der vierte Anschluss 24 ist mit einem ersten Abgang der ersten Sekundärwicklung 72 verbunden und der fünfte Anschluss 25 ist mit einem zweiten Abgang der ersten Sekundärwicklung 72 verbunden. Die einphasige Energieversorgung ist in diesem Ausführungsbeispiel über den vierten Anschluss 24 und den fünften Anschluss 25 auf den Stromrichter verbunden.

In einem weiteren Ausführungsbeispiel der Antriebseinheit 80 umfasst der Transformator 70 eine zweite Sekundärwicklung 74 zum Abgriff einer zweiten Sekundärspannung. Der sechste Anschluss 26 ist auf einen ersten Abgang der zweiten Sekundärwicklung 74 verbunden und der siebte Anschluss 27 ist auf einen zweiten Abgang der zweiten Sekundärwicklung 74 verbunden. Der erste Umrichter 16 wird also von der ersten Sekundärwicklung gespeist und der zweite Umrichter 18 wird von der zweiten Sekundärwicklung gespeist. In einem weiteren Ausführungsbeispiel können weitere Sekundärwicklungen vorgesehen sein, beispielsweise eine separate Sekundärwicklung für jede der Gleichrichterschaltungen 31, 32, 33, 34.

In einem weiteren Ausführungsbeispiel der Antriebseinheit 80 weisen die erste sekundäre Spannung und die zweite sekundäre Spannung dieselben elektrischen Charakteristiken auf. In anderen Worten, ist die Spannung der ersten Sekundärwicklung in Amplitude, Frequenz, Phase und Wellenform gleich wie die Spannung der zweiten Sekundärwicklung. Ein Verbraucher der an der ersten Wicklung angeschlossen ist, kann also ohne Einschränkung, völlig äquivalent an die zweite Sekundärwicklung angeschlossen werden. Die erste Sekundärwicklung und die zweite Sekundärwicklung wären also untereinander austauschbar, wie auch verbindbar.

In einem weiteren Ausführungsbeispiel der Antriebseinheit 80 ist der erste Gleichspannungszwischenkreis 66 über einen ersten Wechselrichter 76 mit der ersten elektrischen Maschine 12 verbunden und der zweite Gleichspannungszwischenkreis 68 über einen zweiten Wechselrichter 78 mit der zweiten elektrischen Maschine 14 verbunden. Die Umrichter, das heisst der erste Umrichter 16 und der zweite Umrichter 18 betreiben jeweils eine separate Maschine. In einem weiteren Ausführungsbeispiel betreiben die Umrichter jeweils mehrere Maschinen, wie in Fig. 2 gezeigt ist.

Die Umrichter 76, 78 sind auf die elektrischen Maschinen 12, 14 abgestimmt. Sie stellen den elektrischen Maschinen 12, 14 die benötigten elektrischen Grössen, das heisst Spannungs- und Stromwerte mit entsprechender Amplitude, Frequenz, Phase und Wellenform zur Verfügung. Sind die elektrischen Maschinen 12, 14 Gleichstrommaschinen, können die Umrichter 76, 78 als Gleichstromsteller ausgebildet sein. Andere dem Fachmann bekannte, auf den verwendeten Typ der elektrischen Maschinen 12, 14 abgestimmte Ausführungsformen eines Umrichters, können eingesetzt werden. Die Umrichter 76, 78 sind beispielsweise als dreiphasige Wechselrichter ausgebildet, um dreiphasige Wechselstrommaschinen anzutreiben, wie dies in Fig. 1 und Fig.2 gezeigt ist.

Die Umrichter 76, 78 werden aus den Gleichspannungszwischenkreisen 66, 68, das heisst aus dem ersten Gleichspannungszwischenkreis 66 und aus dem zweiten Gleichspannungszwischenkreis 68, mit Energie versorgt. In einem weiteren Ausführungsbeispiel kommt der Umrichter ohne Energiespeicher aus. Eine solche Umrichtertopologie ist dem Fachmann als Matrixkonverter bekannt.

In einem Ausführungsbeispiel umfassen die beiden Umrichter 16, 18 weiter einen Brems-Chopper. Der Brems-Chopper umfasst einen Gleichstromsteller und einen Bremswiderstand. Der Brems-Chopper schützt den Gleichspannungszwischenkreis vor Überspannung. Weiter können die beiden Umrichter 16, 18 einen Wechselrichter umfassen. Dieser Wechselrichter kann zur Erzeugung einer Hilfsspannungsversorgung genutzt werden und kann Hilfslasten, wie beispielsweise Klimaanlagen, Heizungen, Hilfsmotoren, usw. versorgen. Die Umrichter 16, 18 können einen weiteren Gleichstromsteller umfassen. Dieser Gleichstromsteller kann zur Ladung einer Batterie vorgesehen sein und eine galvanische Trennung umfassen.

In einem weiteren Ausführungsbeispiel der Antriebseinheit 80 ist Antriebseinheit 80 zum Antreiben eines Fahrzeuges 82 vorgesehen. Das Fahrzeug 82 ist spurgeführt. Das Fahrzeug kann beispielsweise eine Eisenbahn, eine Untergrundbahn oder eine Strassenbahn sein. Die Maschinen sind dazu bestimmt, die Fahrräder dieses Fahrzeuges anzutreiben.

### Bezugszeichenliste

- 10: Stromrichter
- 12: erste elektrische Maschine
- 14: zweite elektrische Maschine
- 16: erster Umrichter
- 18: zweiter Umrichter
- 21: erster Anschluss
- 22: zweiter Anschluss
- 23: dritter Anschluss
- 24: vierter Anschluss
- 25: fünfter Anschluss
- 26: sechster Anschluss
- 27: siebter Anschluss
- 31: erste Gleichrichterschaltung
- 32: zweite Gleichrichterschaltung
- 33: dritte Gleichrichterschaltung
- 34: vierte Gleichrichterschaltung
- 36: erster Strompfad
- 37: zweiter Strompfad
- 38: erster Teilstrompfad
- 39: zweiter Teilstrompfad
- 41: erster gleichspannungsseitiger Pol
- 42: zweiter gleichspannungsseitiger Pol
- 43: dritter gleichspannungsseitiger Pol
- 44: vierter gleichspannungsseitiger Pol
- 51: erster wechselstromseitiger Pol
- 52: zweiter wechselstromseitiger Pol
- 53: dritter wechselstromseitiger Pol
- 54: vierter wechselstromseitiger Pol
- 55: fünfter wechselstromseitiger Pol
- 56: sechster wechselstromseitiger Pol
- 57: siebter wechselstromseitiger Pol
- 58: achter wechselstromseitiger Pol
- 60: dreiphasige Energieversorgung
- 62: einphasige Energieversorgung
- 63: Schalteinheit
- 64: Halbeleiterschalter
- 65: elektromechanischer Umschalter
- 66: erster Gleichspannungszwischenkreis
- 68: zweiter Gleichspannungszwischenkreis
- 70: Transformator
- 72: erste Sekundärwicklung
- 74: zweite Sekundärwicklung
- 76: erster Wechselrichter
- 78: zweiter Wechselrichter
- 80: Antriebseinheit
- 82: Fahrzeug

## Patentansprüche

1. Stromrichter (10) zum Betreiben einer ersten elektrischen Maschine (12) und einer zweiten elektrischen Maschine (14), umfassend;
einen ersten Umrichter (16), einen zweiten Umrichter (18), sowie einen ersten Anschluss (21), einen zweiten Anschluss (22) und einen dritten Anschluss (23) für die Verbindung des Stromrichters (10) mit einer dreiphasigen Energieversorgung (60), wobei
der erste Umrichter (16) eine erste Gleichrichterschaltung (31) und eine zweite Gleichrichterschaltung (32), der zweite Umrichter (18) eine dritte Gleichrichterschaltung (33) umfassen, wobei
die erste Gleichrichterschaltung (31) einen ersten wechselstromseitigen Pol (51) und einen zweiten wechselstromseitigen Pol (52) aufweist, die zweite Gleichrichterschaltung (32) einen dritten wechselstromseitigen Pol (53) und einen vierten wechselstromseitigen Pol (54) aufweist und die dritte Gleichrichterschaltung (33) einen fünften wechselstromseitigen Pol (55) und einen sechsten wechselstromseitigen Pol (56) aufweist,
die erste Gleichrichterschaltung (31) und die zweite Gleichrichterschaltung (32) gleichspannungsseitig parallel geschaltet und mit einem gemeinsamen ersten gleichspannungsseitigen Pol (41) und einem gemeinsamen zweiten gleichspannungsseitigen Pol (42) verbunden sind, wobei
die dritte Gleichrichterschaltung (33) gleichspannungsseitig auf einen dritten gleichspannungsseitigen Pol (43) und einen vierten gleichspannungsseitigen Pol (44) verbunden ist, wobei
der erste gleichspannungsseitige Pol (41) mit dem dritten gleichspannungsseitigen Pol (43) über einen ersten Strompfad (36) zumindest verbindbar ist und
der zweite gleichspannungsseitige Pol (42) mit dem vierten gleichspannungsseitigen Pol (44) über einen zweiten Strompfad (37) zumindest verbindbar ist, wobei der erste Strompfad (36) und der zweite Strompfad (37) jeweils einen Halbleiterschalter (64, 64') umfasst, und wobei der Stromrichter (10) so eingerichtet ist, dass der zweite Umrichter (18) mit Energie aus einem mit dem ersten gleichspannungsseitigen Pol (41) und dem zweiten gleichspannungsseitigen Pol (42) verbundenen ersten Gleichspannungszwischenkreis (66) versorgt wird, wenn der erste Strompfad (36) und der zweite Strompfad (37) geschlossen sind,
wobei der jeweilige Halbleiterschalter (64,64') Teil der ersten Gleichrichterschaltung (31) oder dritten Gleichrichterschaltung (33) ist.

2. Stromrichter nach einem der vorhergehenden Ansprüchen, wobei
der erste Anschluss (21) mit dem dritten wechselstromseitigen Pol (53) zumindest verbindbar ist,
der zweite Anschluss (22) mit dem vierten wechselstromseitigen Pol (54) zumindest verbindbar ist, und
der dritte Anschluss (23) mit dem ersten wechselstromseitigen Pol (51) zumindest verbindbar ist.

3. Stromrichter (10) nach einem der vorhergehenden Ansprüche, wobei
der erste Strompfad (36) einen ersten Teilstrompfad (38) umfasst, wobei
über diesen ersten Teilstrompfad (38) der erste gleichspannungsseitige Pol (41) und der fünfte wechselstromseitige Pol (55) zumindest verbindbar sind, und
der zweite Strompfad (37) einen zweiten Teilstrompfad (39) umfasst, wobei
über diesen zweiten Teilstrompfad (39) der zweite wechselstromseitige Pol (52) und der sechste wechselstromseitige Pol (56) zumindest verbindbar sind.

4. Stromrichter nach Anspruch 3, zusätzlich umfassend;
eine Schalteinheit (63), welche Schalteinheit (63) für das Umschalten zwischen Schaltzuständen vorgesehen ist, wobei
in einem ersten Schaltzustand die Schalteinheit (63) den ersten Teilstrompfad (38) schliesst und
den zweiten Teilstrompfad (39) schliesst, und
in einem zweiten Schaltzustand die Schalteinheit (63) mindestens den ersten Teilstrompfad (38) oder den zweiten Teilstrompfad (39) unterbricht.

5. Stromrichter nach Anspruch 4, zusätzlich umfassend einen vierten Anschluss (24) und einen fünften Anschluss (25) für die Verbindung des Stromrichters (10) mit einer einphasigen Energieversorgung (62), wobei
im ersten Schaltzustand die Schalteinheit (63) den ersten Anschluss (21) mit dem dritten wechselstromseitigen Pol (53) verbindet,
den zweiten Anschluss (22) mit dem vierten wechselstromseitigen Pol (54) verbindet,
den dritten Anschluss (23) mit dem ersten wechselstromseitigen Pol (51) verbindet, wobei
im zweiten Schaltzustand die Schalteinheit (63) den ersten wechselstromseitigen Pol (51) mit dem vierten Anschluss (24) und den zweiten wechselstromseitigen Pol (52) mit dem fünften Anschluss (25) verbindet.

6. Stromrichter nach Anspruch 4 oder 5,
wobei
im zweiten Schaltzustand die Schalteinheit (63) den ersten wechselstromseitigen Pol (51) und den dritten wechselstromseitigen Pol (53) miteinander verbindet und den zweiten wechselstromseitigen Pol (52) und den vierten wechselstromseitigen Pol (54) miteinander verbindet.

7. Stromrichter nach Anspruch 4 bis 6,
wobei
der Stromrichter (10) einen sechsten Anschluss (26) und einen siebten Anschluss (27) für die Verbindung des Stromrichters (10) mit der einphasigen Energieversorgung (62) umfasst, wobei
im zweiten Schaltzustand die Schalteinheit (63), den fünften wechselstromseitigen Pol (55) mit dem sechsten Anschluss (26) verbindet und den sechsten wechselstromseitigen Pol (56) mit dem siebten Anschluss (27) verbindet.

8. Stromrichter nach einem der Ansprüche 4 bis 7,
wobei der zweite Umrichter (18) eine vierte Gleichrichterschaltung (34) umfasst, wobei
die vierte Gleichrichterschaltung (34) einen siebten wechselstromseitigen Pol (57) und einen achten wechselstromseitigen Pol (58) aufweist, wobei
die dritte Gleichrichterschaltung (33) und die vierte Gleichrichterschaltung (34) gleichspannungsseitig parallel geschaltet und mit dem dritten gleichspannungsseitigen Pol (43) und dem vierten gleichspannungsseitigen Pol (44) verbunden sind, wobei
die Schalteinheit (63) im zweiten Schaltzustand
den fünften wechselstromseitigen Pol (55) und den siebten wechselstromseitigen Pol (57) miteinander verbindet und den sechsten wechselstromseitigen Pol (56) und den achten wechselstromseitigen Pol (58) miteinander verbindet.

9. Stromrichter (10) nach einem der vorhergehenden Ansprüche, wobei mindestens eine der ersten Gleichrichterschaltung (31), zweiten Gleichrichterschaltung (32), dritten Gleichrichterschaltung (33) oder vierten Gleichrichterschaltung (34) als Vierquadrantensteller ausgebildet ist.

10. Stromrichter (10) nach einem der vorhergehenden Ansprüche, wobei mindestens die erste Gleichrichterschaltung (31) oder die zweiten Gleichrichterschaltung (32), sowie mindestens die dritte Gleichrichterschaltung (33) oder die vierte Gleichrichterschaltung (34) als Vierquadrantensteller ausgebildet sind.

11. Stromrichter (10) nach einem der vorhergehenden Ansprüche, wobei die Schalteinheit (63) elektromechanische Umschalter (65) zum Umschalten zwischen dem ersten Schaltzustand und dem zweiten Schaltzustand umfasst.

12. Antriebseinheit (80), umfassend einen Stromrichter (10), welcher Stromrichter (10) nach einem der Ansprüche 1 bis 11 ausgebildet ist,
den ersten Gleichspannungszwischenkreis (66), welcher mit dem ersten gleichspannungsseitigen Pol (41) und dem zweiten gleichspannungsseitigen Pol (42) verbunden ist, und
einen zweiten Gleichspannungszwischenkreis (68), welcher mit dem dritten gleichspannungsseitigen Pol (43) und dem vierten gleichspannungsseitigen Pol (44) verbunden ist,
eine dreiphasige Energieversorgung (60), welche mit dem ersten Anschluss (21), dem zweiten Anschluss (22) und dem dritten Anschluss (23) verbunden ist.

13. Antriebseinheit (80) nach Anspruch 12,
wobei der erste Gleichspannungszwischenkreis (66) und der zweite Gleichspannungszwischenkreis (68) als kapazitive Gleichspannungszwischenkreise ausgebildet sind.

14. Antriebseinheit (80) nach einem der Ansprüche 12 oder 13,
wobei die dreiphasige Energieversorgung (60) als Asynchrongenerator ausgebildet ist.

15. Antriebseinheit (80) nach einem der Ansprüche 12 bis 14,
zusätzlich umfassend die einphasige Energieversorgung (62), wobei die einphasige Energieversorgung (62) als Transformator (70) ausgebildet ist, wobei
der Transformator (70) eine erste Sekundärwicklung (72) zum Abgriff einer ersten Sekundärspannung umfasst, wobei
der vierte Anschluss (24) mit einem ersten Abgang der ersten Sekundärwicklung (72) verbunden ist und der fünfte Anschluss (25) mit einem zweiten Abgang der ersten Sekundärwicklung (72) verbunden ist.

16. Antriebseinheit (80) nach Anspruch 15, wobei
der Transformator (70) eine zweite Sekundärwicklung (74) zum Abgriff einer zweiten Sekundärspannung umfasst, wobei
der sechste Anschluss (26) auf einen ersten Abgang der zweiten Sekundärwicklung (74) verbunden ist und der siebte Anschluss (27) auf einen zweiten Abgang der zweiten Sekundärwicklung (74) verbunden ist.

17. Antriebseinheit (80) nach einem der Ansprüche 15 oder 16, wobei die erste sekundäre Spannung und die zweite sekundäre Spannung dieselben elektrischen Charakteristiken aufweisen.

18. Antriebseinheit (80) nach einem der Ansprüche 12 bis 17, wobei
der erste Gleichspannungszwischenkreis (66) über einen ersten Wechselrichter (76) mit der ersten elektrischen Maschine (12) verbunden ist und
der zweite Gleichspannungszwischenkreis (68) über einen zweiten Wechselrichter (78) mit der zweiten elektrischen Maschine (14) verbunden ist.

19. Antriebseinheit (80) nach einem der Ansprüche 12 bis 18, wobei die Antriebseinheit (80) zum Antreiben eines Fahrzeuges (82) vorgesehen ist, wobei das Fahrzeug (82) spurgeführt ist.

## Claims

1. Power converter (10) for operating a first electric machine (12) and a second electric machine (14), comprising:
a first converter element (16), a second converter element (18) and a first terminal connection (21), a second terminal connection (22) and a third terminal connection (23) for connecting the power converter (10) to a three-phase energy supply (60), wherein
the first converter element (16) comprises a first rectifier circuit (31) and a second rectifier circuit (32), the second converter element (18) comprises a third rectifier circuit (33), wherein
the first rectifier circuit (31) has a first AC-side pole (51) and a second AC-side pole (52), the second rectifier circuit (32) has a third AC-side pole (53) and a fourth AC-side pole (54) and the third rectifier circuit (33) has a fifth AC-side pole (55) and a sixth AC-side pole (56),
the first rectifier circuit (31) and the second rectifier circuit (32) are connected in parallel on the DC-voltage side and are connected to a common first DC-voltage-side pole (41) and a common second DC-voltage-side pole (42), wherein
the third rectifier circuit (33) is connected on the DC-voltage side to a third DC-voltage-side pole (43) and a fourth DC-voltage-side pole (44), wherein
the first DC-voltage-side pole (41) is at least connectable to the third DC-voltage-side pole (43) by means of a first current path (36) and
the second DC-voltage-side pole (42) is at least connectable to the fourth DC-voltage-side pole (44) by means of a second current path (37), wherein
the first current path (36) and the second current path (37) each comprise a semiconductor switch (64, 64'), and wherein the power converter (10) is configured such that the second converter element (18) is supplied with energy from a first DC voltage intermediate circuit (66) connected to the first DC-voltage-side pole (41) and the second DC-voltage-side pole (42) when the first current path (36) and the second current path (37) are closed,
wherein the respective semiconductor switch (64, 64') is part of the first rectifier circuit (31) or third rectifier circuit (33).

2. Power converter according to one of the preceding claims, wherein
the first terminal connection (21) is at least connectable to the third AC-side pole (53),
the second terminal connection (22) is at least connectable to the fourth AC-side pole (54), and
the third terminal connection (23) is at least connectable to the first AC-side pole (51).

3. Power converter (10) according to either of the preceding claims, wherein
the first current path (36) comprises a first partial current path (38), wherein
the first DC-voltage-side pole (41) and the fifth AC-side pole (55) are at least connectable by means of said first partial current path (38), and
the second current path (37) comprises a second partial current path (39), wherein
the second AC-side pole (52) and the sixth AC-side pole (56) are at least connectable by means of said second partial current path (39).

4. Power converter according to Claim 3, additionally comprising:
a switching unit (63), which switching unit (63) is provided for switching over between switching states, wherein,
in a first switching state, the switching unit (63) closes the first partial current path (38) and
closes the second partial current path (39) and,
in a second switching state, the switching unit (63) interrupts at least the first partial current path (38) or the second partial current path (39).

5. Power converter according to Claim 4, additionally comprising a fourth terminal connection (24) and a fifth terminal connection (25) for connecting the power converter (10) to a single-phase energy supply (62), wherein,
in the first switching state, the switching unit (63) connects the first terminal connection (21) to the third AC-side pole (53),
connects the second terminal connection (22) to the fourth AC-side pole (54),
connects the third terminal connection (23) to the first AC-side pole (51), wherein,
in the second switching state, the switching unit (63) connects the first AC-side pole (51) to the fourth terminal connection (24) and the second AC-side pole (52) to the fifth terminal connection (25).

6. Power converter according to Claim 4 or 5, wherein, in the second switching state, the switching unit (63) connects the first AC-side pole (51) and the third AC-side pole (53) to one another and connects the second AC-side pole (52) and the fourth AC-side pole (54) to one another.

7. Power converter according to Claim 4 to 6, wherein the power converter (10) comprises a sixth terminal connection (26) and a seventh terminal connection (27) for connecting the power converter (10) to the single-phase energy supply (62), wherein,
in the second switching state, the switching unit (63) connects the fifth AC-side pole (55) to the sixth terminal connection (26) and connects the sixth AC-side pole (56) to the seventh terminal connection (27).

8. Power converter according to one of Claims 4 to 7, wherein the second converter element (18) comprises a fourth rectifier circuit (34), wherein
the fourth rectifier circuit (34) has a seventh AC-side pole (57) and an eighth AC-side pole (58), wherein
the third rectifier circuit (33) and the fourth rectifier circuit (34) are connected in parallel on the DC-voltage side and are connected to the third DC-voltage-side pole (43) and the fourth DC-voltage-side pole (44), wherein,
in the second switching state, the switching unit (63) connects the fifth AC-side pole (55) and the seventh AC-side pole (57) to one another and connects the sixth AC-side pole (56) and the eighth AC-side pole (58) to one another.

9. Power converter (10) according to one of the preceding claims, wherein at least one of the first rectifier circuit (31), second rectifier circuit (32), third rectifier circuit (33) or fourth rectifier circuit (34) is configured as a four-quadrant actuator.

10. Power converter (10) according to one of the preceding claims, wherein at least the first rectifier circuit (31) or the second rectifier circuit (32) and at least the third rectifier circuit (33) or the fourth rectifier circuit (34) are configured as four-quadrant actuators.

11. Power converter (10) according to one of the preceding claims, wherein the switching unit (63) comprises electromechanical changeover switches (65) for switching over between the first switching state and the second switching state.

12. Drive unit (80), comprising a power converter (10), which power converter (10) is configured according to one of Claims 1 to 11,
the first DC voltage intermediate circuit (66), which first DC voltage intermediate circuit (66) is connected to the first DC-voltage-side pole (41) and the second DC-voltage-side pole (42), and
a second DC voltage intermediate circuit (68), which second DC voltage intermediate circuit (68) is connected to the third DC-voltage-side pole (43) and the fourth DC-voltage-side pole (44),
a three-phase energy supply (60), which three-phase energy supply (60) is connected to the first terminal connection (21), the second terminal connection (22) and the third terminal connection (23).

13. Drive unit (80) according to Claim 12, wherein the first DC voltage intermediate circuit (66) and the second DC voltage intermediate circuit (68) are configured as capacitive DC voltage intermediate circuits.

14. Drive unit (80) according to either of Claims 12 and 13, wherein the three-phase energy supply (60) is configured as an asynchronous generator.

15. Drive unit (80) according to one of Claims 12 to 14, additionally comprising the single-phase energy supply (62), wherein the single-phase energy supply (62) is configured as a transformer (70), wherein
the transformer (70) comprises a first secondary winding (72) for tapping a first secondary voltage, wherein
the fourth terminal connection (24) is connected to a first outgoing circuit of the first secondary winding (72) and the fifth terminal connection (25) is connected to a second outgoing circuit of the first secondary winding (72).

16. Drive unit (80) according to Claim 15, wherein
the transformer (70) comprises a second secondary winding (74) for tapping a second secondary voltage, wherein
the sixth terminal connection (26) is connected to a first outgoing circuit of the second secondary winding (74) and the seventh terminal connection (27) is connected to a second outgoing circuit of the second secondary winding (74).

17. Drive unit (80) according to either of Claims 15 and 16, wherein the first secondary voltage and the second secondary voltage have the same electrical characteristics.

18. Drive unit (80) according to one of Claims 12 to 17, wherein
the first DC voltage intermediate circuit (66) is connected to the first electric machine (12) by means of a first inverter (76) and
the second DC voltage intermediate circuit (68) is connected to the second electric machine (14) by means of a second inverter (78).

19. Drive unit (80) according to one of Claims 12 to 18, wherein the drive unit (80) is provided for driving a vehicle (82), wherein the vehicle (82) is track-guided.

## Revendications

1. Convertisseur de puissance (10) destiné à faire fonctionner une première machine électrique (12) et une deuxième machine électrique (14), ledit convertisseur de puissance comprenant ;
un premier convertisseur (16), un deuxième convertisseur (18), et une première borne (21), une deuxième borne (22) et une troisième borne (23) destinées à relier le convertisseur de puissance (10) à une alimentation triphasée (60), le premier convertisseur (16) comprenant un premier circuit redresseur (31) et un deuxième circuit redresseur (32), le deuxième convertisseur (18) comprenant un troisième circuit redresseur (33),
le premier circuit redresseur (31) comportant un premier pôle côté courant alternatif (51) et un deuxième pôle côté courant alternatif (52), le deuxième circuit redresseur (32) comportant un troisième pôle côté courant alternatif (53) et un quatrième pôle côté courant alternatif (54), et le troisième circuit redresseur (33) comportant un cinquième pôle côté courant alternatif (55) et un sixième pôle côté courant alternatif (56),
le premier circuit redresseur (31) et le deuxième circuit redresseur (32) étant montés en parallèle côté tension continue et étant reliés à un premier pôle commun côté tension continue (41) et à un deuxième pôle commun côté tension continue (42),
le troisième circuit redresseur (33) étant relié du côté tension continue à un troisième pôle côté tension continue (43) et à un quatrième pôle côté tension continue (44),
le premier pôle côté tension continue (41) pouvant être au moins relié au troisième pôle côté tension continue (43) par le biais d'un premier chemin de courant (36) et
le deuxième pôle côté tension continue (42) pouvant être au moins relié au quatrième pôle côté tension continue (44) par le biais d'un deuxième chemin de courant (37),
le premier chemin de courant (36) et le deuxième chemin de courant (37) comprenant chacun un commutateur à semi-conducteur (64, 64'), et le convertisseur de puissance (10) étant conçu de manière à ce que le deuxième convertisseur (18) soit alimenté en énergie à partir d'un premier circuit intermédiaire à tension continue (66) relié au premier pôle côté tension continue (41) et au deuxième pôle côté tension continue (42) lorsque le premier chemin de courant (36) et le deuxième chemin de courant (37) sont fermés,
le commutateur à semi-conducteur respectif (64, 64') faisant partie du premier circuit redresseur (31) ou du troisième circuit redresseur (33).

2. Convertisseur de puissance selon l'une des revendications précédentes,
la première borne (21) pouvant être au moins reliée au troisième pôle côté courant alternatif (53),
la deuxième borne (22) pouvant être au moins reliée au quatrième pôle côté courant alternatif (54), et
la troisième borne (23) pouvant au moins être reliée au premier pôle côté courant alternatif (51).

3. Convertisseur de puissance (10) selon l'une des revendications précédentes,
le premier chemin de courant (36) comprenant un premier chemin de courant partiel (38), le premier pôle côté tension continue (41) et le cinquième pôle côté courant alternatif (55) pouvant être au moins reliés par le biais de ce premier chemin de courant partiel (38), et
le deuxième chemin de courant (37) comprenant un deuxième chemin de courant partiel (39), le deuxième pôle côté courant alternatif (52) et le sixième pôle côté courant alternatif (56) pouvant être au moins reliés par le biais de ce deuxième chemin de courant partiel (39).

4. Convertisseur de puissance selon la revendication 3, comprenant en outre :
une unité de commutation (63), laquelle unité de commutation (63) est prévue pour commuter entre des états de commutation,
dans un premier état de commutation, l'unité de commutation (63) fermant le premier chemin de courant partiel (38) et le deuxième chemin de courant partiel (39), et
dans un deuxième état de commutation, l'unité de commutation (63) interrompant au moins le premier chemin de courant partiel (38) ou le deuxième chemin de courant partiel (39).

5. Convertisseur de puissance selon la revendication 4, comprenant en outre une quatrième borne (24) et une cinquième borne (25) destinées à relier le convertisseur de puissance (10) à une alimentation en énergie monophasée (62),
dans le premier état de commutation, l'unité de commutation (63) reliant la première borne (21) au troisième pôle côté courant alternatif (53), reliant la deuxième borne (22) au quatrième pôle côté courant alternatif (54), et reliant la troisième borne (23) au premier pôle côté courant alternatif (51),
dans le deuxième état de commutation, l'unité de commutation (63) reliant le premier pôle côté courant alternatif (51) à la quatrième borne (24) et le deuxième pôle côté courant alternatif (52) à la cinquième borne (25).

6. Convertisseur de puissance selon la revendication 4 ou 5,
dans le deuxième état de commutation, l'unité de commutation (63) reliant le premier pôle côté courant alternatif (51) et le troisième pôle côté courant alternatif (53) l'un à l'autre et reliant le deuxième pôle côté courant alternatif (52) et le quatrième pôle côté courant alternatif (54) l'un à l'autre.

7. Convertisseur de puissance selon la revendication 4 à 6,
le convertisseur de puissance (10) comprenant une sixième borne (26) et une septième borne (27) destinées à relier le convertisseur de puissance (10) à l'alimentation en énergie monophasée (62),
dans le deuxième état de commutation, l'unité de commutation (63) reliant le cinquième pôle côté courant alternatif (55) à la sixième borne (26) et reliant le sixième pôle côté courant alternatif (56) à la septième borne (27).

8. Convertisseur de puissance selon l'une des revendications 4 à 7,
le deuxième convertisseur (18) comprenant un quatrième circuit redresseur (34),
le quatrième circuit redresseur (34) comportant un septième pôle côté courant alternatif (57) et un huitième pôle côté courant alternatif (58),
le troisième circuit redresseur (33) et le quatrième circuit redresseur (34) étant montés en parallèle du côté tension continue et étant reliés au troisième pôle côté tension continue (43) et au quatrième pôle côté tension continue (44),
l'unité de commutation (63) reliant dans le deuxième état de commutation le cinquième pôle côté courant alternatif (55) et le septième pôle côté courant alternatif (57) l'un à l'autre et reliant le sixième pôle côté courant alternatif (56) et le huitième pôle côté courant alternatif (58) l'un à l'autre.

9. Convertisseur de puissance (10) selon l'une des revendications précédentes, l'un au moins parmi le premier circuit redresseur (31), le deuxième circuit redresseur (32), le troisième circuit redresseur (33) et le quatrième circuit redresseur (34) étant conçu comme un actionneur à quatre quadrants.

10. Convertisseur de puissance (10) selon l'une des revendications précédentes, au moins le premier circuit redresseur (31) ou le deuxième circuit redresseur (32) et au moins le troisième circuit redresseur (33) ou le quatrième circuit redresseur (34) étant conçus comme des actionneurs à quatre quadrants.

11. Convertisseur de puissance (10) selon l'une des revendications précédentes, l'unité de commutation (63) comprenant des commutateurs électromécaniques (65) destinés à commuter entre le premier état de commutation et le deuxième état de commutation.

12. Unité d'entraînement (80) comprenant un convertisseur de puissance (10), lequel convertisseur de puissance (10) est conçu selon l'une des revendications 1 à 11, le premier circuit intermédiaire à tension continue (66) qui est relié au premier pôle côté tension continue (41) et au deuxième pôle côté tension continue (42) et un deuxième circuit intermédiaire à tension continue (68) qui est relié au troisième pôle côté tension continue (43) et au quatrième pôle côté tension continue (44), une alimentation en énergie triphasée (60) qui est reliée à la première borne (21), à la deuxième borne (22) et à la troisième borne (23).

13. Unité d'entraînement (80) selon la revendication 12,
le premier circuit intermédiaire à tension continue (66) et le deuxième circuit intermédiaire à tension continue (68) étant conçus sous la forme de circuits intermédiaires à tension continue capacitifs.

14. Unité d'entraînement (80) selon l'une des revendications 12 ou 13,
l'alimentation en énergie triphasée (60) étant conçue sous la forme d'un générateur asynchrone.

15. Unité d'entraînement (80) selon l'une des revendications 12 à 14, comprenant en outre l'alimentation en énergie monophasée (62), l'alimentation en énergie monophasée (62) étant conçue sous la forme d'un transformateur (70),
le transformateur (70) comprenant un premier enroulement secondaire (72) destiné à prélever une première tension secondaire,
la quatrième borne (24) étant reliée à une première sortie du premier enroulement secondaire (72) et la cinquième borne (25) étant reliée à une deuxième sortie du premier enroulement secondaire (72).

16. Unité d'entraînement (80) selon la revendication 15,
le transformateur (70) comprenant un deuxième enroulement secondaire (74) destiné à prélever une deuxième tension secondaire,
la sixième borne (26) étant reliée à une première sortie du deuxième enroulement secondaire (74) et la septième borne (27) étant reliée à une deuxième sortie du deuxième enroulement secondaire (74).

17. Unité d'entraînement (80) selon l'une des revendications 15 ou 16, la première tension secondaire et la deuxième tension secondaire ayant les mêmes caractéristiques électriques.

18. Unité d'entraînement (80) selon l'une des revendications 12 à 17,
le premier circuit intermédiaire à tension continue (66) étant relié à la première machine électrique (12) par le biais d'un premier convertisseur (76) et
le deuxième circuit intermédiaire à tension continue (68) étant relié à la deuxième machine électrique (14) par le biais d'un deuxième convertisseur (78).

19. Unité d'entraînement (80) selon l'une des revendications 12 à 18, l'unité d'entraînement (80) étant prévue pour entraîner un véhicule (82), le véhicule (82) étant guidé sur voie.
